# EUROPEAN PATENT APPLICATION

(11) **EP 1 710 682 A2**
(43) Date of publication of application: **11.10.2006**
(21) Application number: 06251600.0
(22) Date of filing: 24.03.2006
(51) Int. Cl.: G06F 3/12

(54) **A print controller with function for guaranteeing the order of print requests received, and a control method therefor**

(30) Priority: 31.03.2005 JP 2005102594; 27.02.2006 JP 2006050592
(71) Applicant: CANON KABUSHIKI KAISHA, Tokyo (JP)
(72) Inventor: Okazawa, Takashi c/o Canon Kabushiki Kaisha, Ohta-ku Tokyo (JP)
(74) Representative: Legg, Cyrus James Grahame

(57) **Abstract**

A technique is provided for reducing a process load when a print job (print data) is output from a client computer to a printer side and guaranteeing the order of prints more securely than in prior art. When an occupancy request is received from a client computer, the printer decides whether to permit occupancy, and returns a response showing whether to permit or refuse occupancy on the basis of a result of the decision. The printer registers the identifier to identify the source of the request in a connection refusal list when a decision made is to refuse occupancy, and afterwards when the occupancy is released and an occupancy request is received, the printer permits occupancy if the occupancy request is accompanied by a registered identifier and refuses occupancy if the request is without the identifier.

## Description

### BACKGROUND OF THE INVENTION

### Field of the Invention

The present invention relates to a technique for guaranteeing an order of print requests in a printing system.

### Description of the Related Art

A system configuration in which one printer is shared by a plurality of client computers is becoming prevalent in office environments.

In such a configuration where a shared printer is used, there is a limitation in the number of connections from client computers to the printer. Accordingly, while one client computer is occupying the printer, it is sometimes impossible for other clients to establish a connection to the printer.

As a result, when the first client computer is attempting to maintain a connection to the printer, its connection can be refused, if another client computer tries to occupy the printer and the occupancy of the printer happens to be released at this moment. Thus, the latter client computer occupies the printer, giving rise to a problem that the order of print requests does not agree with the order of print data transferred.

To solve this problem, JP-A-02-146618 discusses a technique in which the shared printer returns a data packet, which includes a print reservation code, to each source of a print request. Each time the print process is completed on the printer side, the shared printer issues a request to transfer print data, including a print reservation code, to the client computer which is next up in a queue of print reservations.

Further, JP-A-2001-014118 discusses a technique, where, in response to a print request from a client computer, a set of (a) an IP address of a client computer as the source of print request and (b) a job ID of a print job is registered as a job reservation. After that, a request to transfer the job of the job ID included in the job reservation is sent to the client computer (having the IP address) for which a job reservation has been made.

On the other hand, a problem of JP-A-02-146618 is that when the print job (print data) is output from the client computer to the printer side, the printer side takes a leading role in this process, which makes the process complicated. This problem holds true also for JP-A-2001-014118.

### SUMMARY OF THE INVENTION

The summary of present invention is printing control technique which is relating to guaranteeing the order of printing.

According to a first aspect of the present invention, there is provided a printer controller as specified in claims 1 to 9. According to a second aspect of the present invention, there is provided a method of controlling the order of occupancy of a printer as specified in claims 10 to 18. According to a third aspect of the present invention there is provided a computer program as specified in claim 19. According to a fourth aspect of the present invention, there is provided a computer readable medium storing a program as specified in claim 20.

Further features of the present invention will become apparent from the following detailed description of exemplary embodiments with reference to the attached drawings.

### BRIEF DESCRIPTION OF THE DRAWINGS

Fig. 1 is a block diagram showing an example of the outline of a general configuration of a printing system.
Fig. 2A is a block diagram showing an example of a printer according to an embodiment of the present invention.
Fig. 2B is a diagram showing information stored in the network interface or the printer controller in Fig. 2A.
Fig. 3 is a diagram showing a communication function of the network interface in Fig. 1.
Figs. 4A and 4B are flowcharts of an exemplary process sequence in this printing system.
Fig. 5 is a diagram showing an example of a process sequence in this printing system.
Fig. 6 is a diagram showing an example of a process sequence in this printing system.
Fig. 7 is a diagram showing an example of a process sequence in this printing system.
Fig. 8 is a diagram showing an example of a process procedure of the network interface in Fig. 2A.
Fig. 9 is a diagram showing an example of a set-up screen for setting priority of jobs received at the network interface.
Fig. 10 is a diagram showing an example of a communication procedure in this printing system.
Fig. 11 is a diagram showing an example of a communication procedure in this printing system.
Fig. 12 is a diagram showing an example of a communication procedure in this printing system.
Fig. 13 is a diagram showing an example of a communication procedure in this printing system.
Fig. 14 is a flowchart showing an example of a block diagram of a printer according to an embodiment of the present invention.
Fig. 15 is a flowchart showing an example of a communication procedure in this printing system.
Fig. 16 is a diagram showing an example of a communication procedure in this printing system.
Fig. 17 is flowcharts of an exemplary process sequence in this printing system.
Fig. 18 is a diagram showing an example of message relating to a request for an occupancy.
Fig. 19 is a diagram showing an example of message relating to a request for an occupancy.

### DETAILED DESCRIPTION OF THE EMBODIMENTS

Exemplary embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### (First Embodiment)

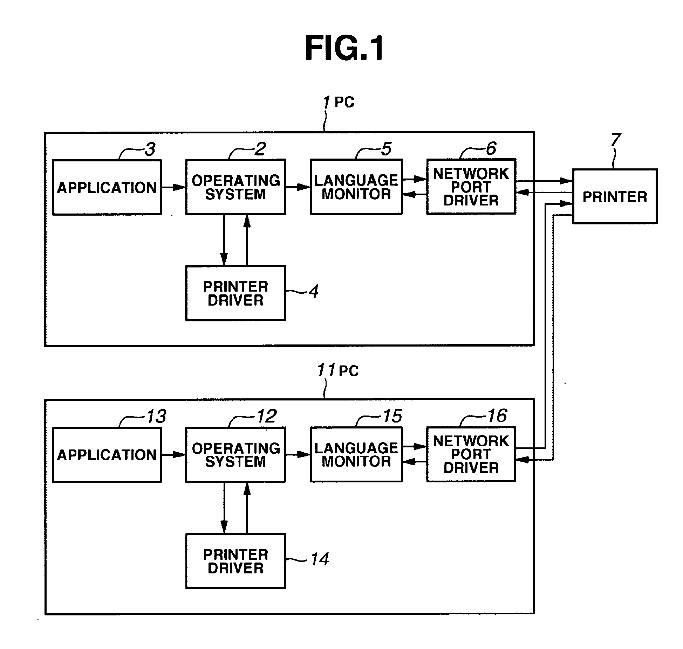

Fig. 1 is a block diagram showing the outline of the system in a first embodiment of the present invention. In Fig. 1, PC1 and PC11 denote computers, each including hardware (not shown) provided in general information processing apparatus, such as a CPU, memory, hard disk, floppy (registered trademark) disk drive, keyboard, mouse, monitor, and network interface. The computers are hereafter referred to as clients in this embodiment.

Numerals 2 and 12 denote operating systems, which each manage the hardware provided in the clients 1 and 11, and the software, such as application 3 or 13, printer driver 4 or 14, language monitor 5 or 15, network port drivers 6 or 16. As a typical operating system, Microsoft's Windows (registered trademark) may be cited.

The application 3 or 13 includes a function, such as a word processor for creating and editing documents and graphics, and a function of editing photographic images. This application can issue a print instruction based on created and edited application data.

Numerals 4 and 14 denote the printer drivers, which read a print instruction issued by the application 3 or 13 (or, receives a print instruction through the operating system 2 or 12), and converts the print instruction into a printer command that can be interpreted by the language monitor 5 or 15, or the printer 7.

Numerals 5 and 15 denote the language monitors, each receive a printer command output from the printer driver 4 or 14, and transmits the printer command through the network port driver 6 or 16 to the printer 7. In a client-computer-based printing system, a printer command needs to be transmitted in accordance with the printing state of the printer while receiving detailed information about the printer's status, and this process is carried out in the language monitor. In a PDL type printing system, however, a load of this process is considered to have been somewhat reduced.

Numerals 6 and 16 denote network port drivers, which each transmit a printer command output from the language monitor 5 or 15 to the printer 7 through the network interface. When the network port drivers 6 and 16 receive a status signal from the printer 7, they output the state signal to the language monitor 5 or 15. Numeral 7 denotes a printer which performs various processes related to printing in accordance with a printer command that arrives from the network port driver 6 or 16.

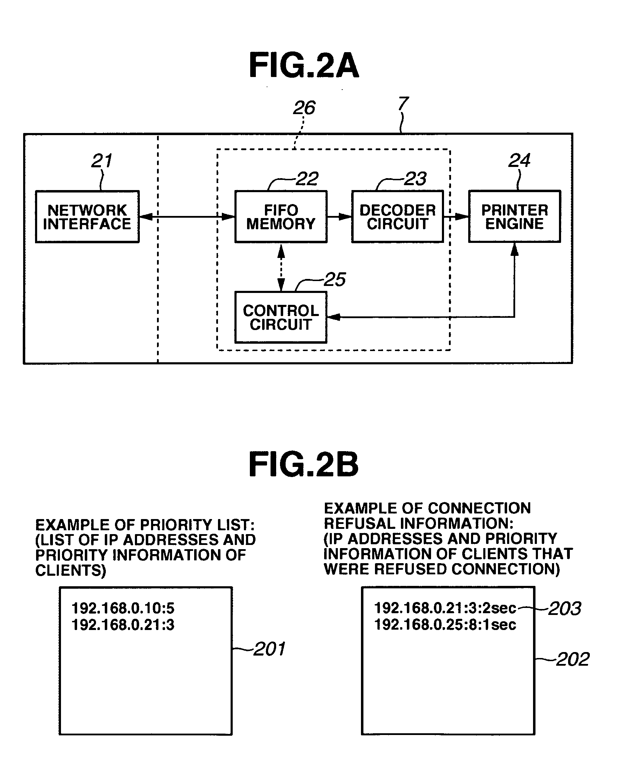

Fig. 2A is a block diagram showing the structure of the printer 7 in Fig. 1 in more detail. Numeral 21 in Fig. 2A denotes a network interface to receive various kinds of command, such as a printer command, from the client 1 or 11. Numeral 26 denotes a so-called printer controller performing various functions

Numeral 22 denotes an FIFO (first-in first-out) memory, which stores image data received from the network interface 21. A decoder circuit 23 decodes image data stored in the FIFO memory 22, and outputs decoded data to the printer engine 24. The printer engine 24 is for example a laser beam printer engine, which, in response to a command from the control circuit 25, makes prints according to image data output by the decoder circuit 23. Numeral 25 denotes the control circuit, configured as a 1-chip CPU, for example, which performs internal communication with the network interface 21. The control circuit 25 also controls the FIFO memory 22, the decoder circuit 23, and the printer engine 24.

Fig. 2B shows information stored in the network interface 21 or the printer controller 7 in Fig. 2A.

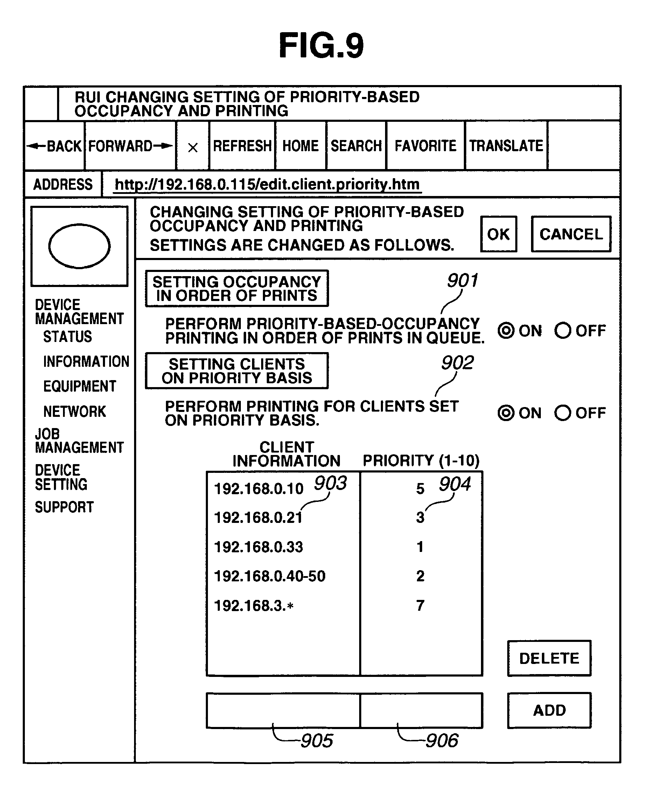

Numeral 201 denotes an example of a priority list, which can be set on a screen in Fig. 9 from the client computer as will be described later. For example, "192.168.0.10:5" shows that the IP address is 192.168.0.10 and the level of priority is 5. In this embodiment, a smaller number indicates higher priority.

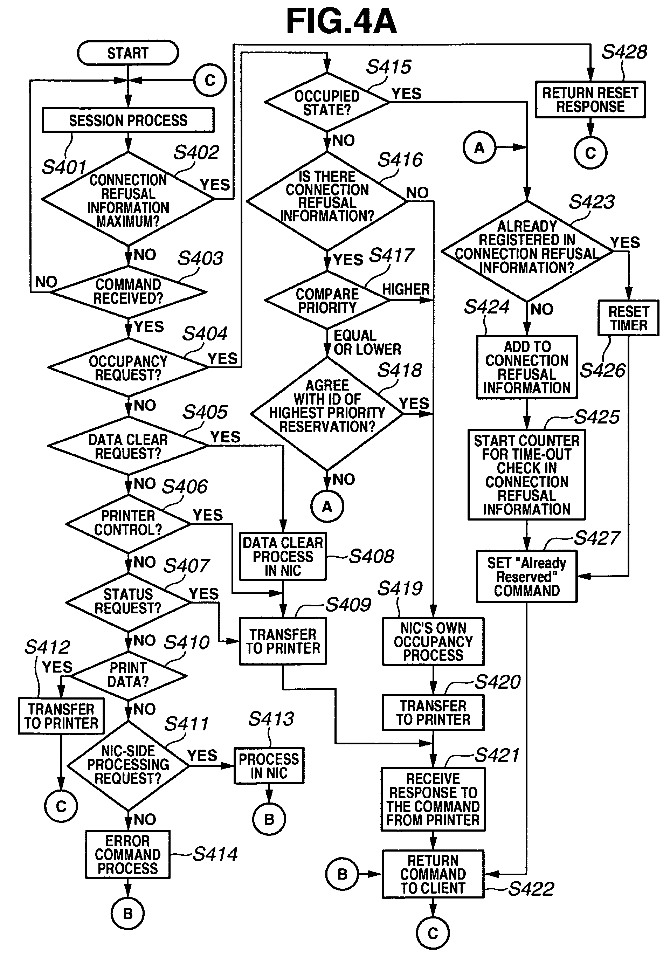

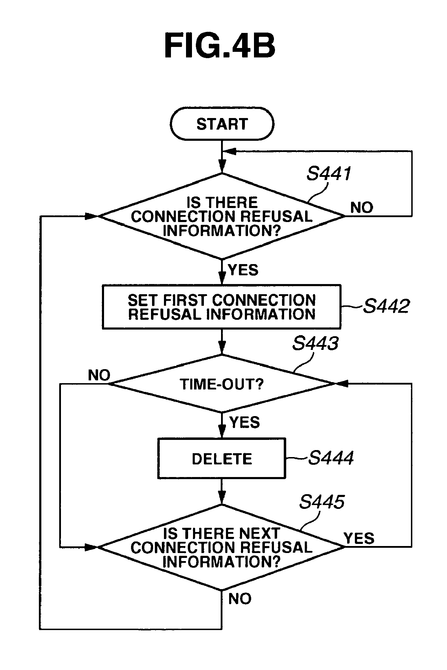

Numeral 202 denotes an example of a connection refusal information list. Each line in the list is an identifier for identifying a client whose connection request was refused (sometimes referred to as connection refusal information). This connection refusal information list 202 is information generated in Step 424 in Fig. 4 to be described later on. The upper identifier in the list is the identifier which was registered earlier in chronological order. Numeral 203 in Fig. 2B denotes a timer value. When the timer value 203 satisfies a specified condition ("time out" occurs, for example), the relevant identifier is deleted from the connection refusal information list. A detailed process will be described later when reference to Fig. 4.

In 202, IP addresses are shown as identifiers, but the identifiers are not limited to IP addresses. For example, client computer names, user names, MAC addresses, group identifiers, and other identifiers may be used.

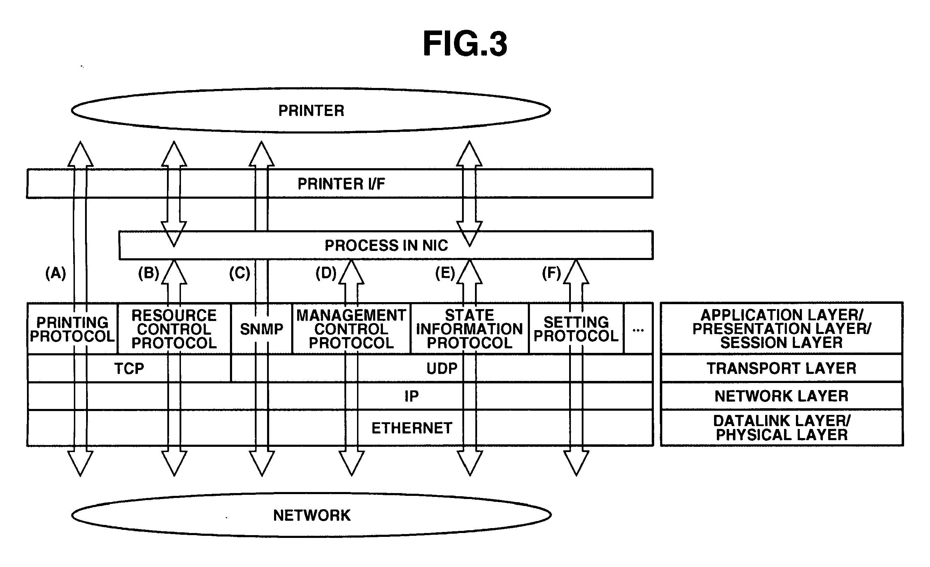

Fig. 3 is a diagram showing a structure of the network protocol in the network interface 21 in Fig. 2A.

Data is input or output from the Ethernet (registered trademark) network in a lower location, into the network interface and from the interface to the network by different protocols. The printer is located at the top of this drawing. Among protocols, there are some protocols that reach the printer but other protocols operate only within the network interface. The (A) in Fig. 3 is a protocol for print, which communicates with the network interface by TCP protocol, and the network interface takes data and sends it through the printer interface to the printer. When a response is returned from the printer, also the TCP protocol is used to send the response to the client computer. The (B) is a protocol for control of resources, which handles log information about various kinds of printer. The network interface and the printer asynchronously transmit the log information in accordance with the print process of the printer. Resource information is stored in the network interface. With respect to the protocol for resource control from the network, the network interface executes its process and sends a response. With regard to the SNMP protocol of (C), there are two parts - the first part for processing up to the printer and the other part for processing by the network interface as illustrated. Similar operations are performed for protocols (D), (E) and (F).

An example of the print operation in the printing system will be illustrated, which has been described with reference to Figs. 1 to 3.

When the operator operates an application 3 on the client computer 1 side to issue a print instruction, the print instruction is sent from the application 3 through the operating system 2 to the printer driver 4. In accordance with the print instruction issued from the application 3, the printer driver 4 converts raw data into image data and compresses the data. Compressed data is output together with a page start command, which specifies a paper size, a line length, a number of lines of bit map data, and an image data end command.

When a printer command is output, the operating system 2 notifies the start of a job to the language monitor 5. Then, the operating system 2 turns over output printer commands one after another to the language monitor 5. When the job is started, the language monitor 5 sends an occupancy request command to the printer 7 through the intermediary of the network port driver 6.

When the language monitor 5 succeeds in occupying the printer, the language monitor 5 transmits received printer commands one after another to the printer 7. Note that before sending an image data command to the printer 7, the language monitor 5 transmits a status request command to the printer to obtain a status signal from the printer 7 and confirm that it is possible to transmit an image data command. When the process of sending printer commands for one page is completed, the language monitor 5 transmits a print request command. When a print request command is received, the control circuit 25 directs the printer engine 24 to start printing. When the printer status shows that printing of one page has ended normally, the language monitor 5 releases the relevant page memory. On the other hand, if the obtained printer status shows an error, the language monitor 5 starts re-transmitting printer commands for the page which has not printed normally.

When the transmission of printer commands for all pages of the job has been completed, without waiting for paper ejection to be completed, the language monitor 5 transmits occupancy release command. The language monitor 5, even after sending an occupancy release command, continues obtaining a status signal of the printer 7. When an obtained printer status shows normal termination of page printing, the language monitor 5 releases the relevant page memory. On the other hand, if an error is detected, the language monitor 5 again transmits an occupancy request command, and attempts to recover the page from the error.

In the above description of the print operation, the printer driver generates bit map image data as print data, but this embodiment is not limited to the case. For example, this embodiment is applicable to so-called page description languages, such as Canon Inc.' s LIPS and Adobe Systems Inc.' s PostScript3 and also applicable to various types of data that can be interpreted by printers and eventually recorded on recording media. As applicable printers, in addition to laser beam printers, ink jet printers and printers of other printing types can be used.

With reference to Figs. 4A and 4B, the processing performed by the network interface 21 (printer) in Fig. 2A is described in detail. Description will start with Steps S401 to S404 in Fig. 4A, and move on to (1) a process when a decision of YES is made at Step S404, and then to (2) a process when a decision of NO is made at Step S404, and finally, a case of Fig. 4B will be described.

In Step S401, a session process is performed. More specifically, a process on SYN in TCP protocol is carried out. The TCP protocol residing in the transport layer has been described with reference to Fig. 3. In Step S402, a decision is made if the identifiers registered in the connection refusal information list are over the maximum value.

If the decision in Step S402 is YES, in other words, if the registered number of client computer identifiers in the connection refusal information list is MAX (maximum value), a RESET response is returned to the client computer (Step S428). It is possible to assume not less than 0 for the MAX value. By setting a limit on the registered number of client computer identifiers, the memory capacity can be saved.

In the decision process in Step S402, if there is a connect request received through another communication port, such as a request for printer control or status response, a decision of NO is made regardless of the registered number of client computer identifiers.

On the other hand, if a decision of NO is made in Step S402, the network interface 21 performs a process corresponding to each kind of command received from the outside. This process will be described in detail as follows. In Step S403, the network interface 21 receives a command sent from external devices, such as the client 1 or 11. If a decision of YES is made in Step S403, a kind of commands is judged in Step S404 or later. Meanwhile, if a decision of NO is made in Step S403, the flow returns to Step S401 to wait ready to receive a command.

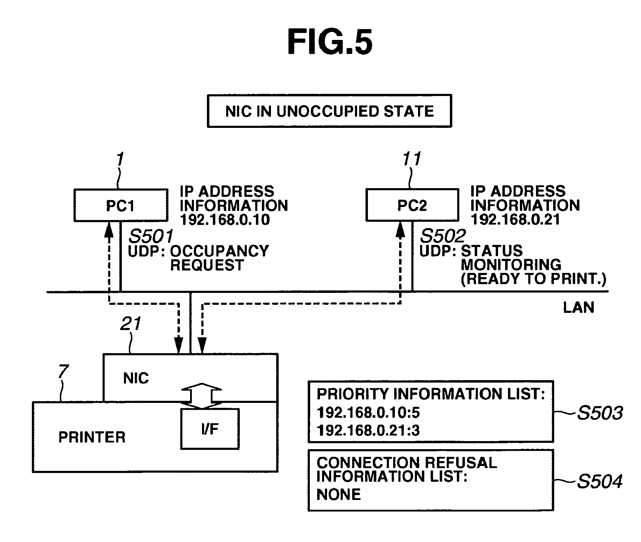

In Step S404, a decision is made whether an occupancy request command is received. To be more specific, the command number is identified and an occupancy request command is identified. Here, an occupancy request command may be construed as securing a communication port to communicate print data. As a result, by securing a port for print data (print job), it is possible to take occupancy of the printer's function related to outputting printed paper. The state of occupying the printer function is hereafter referred to as the occupied state. However, if the communication port through which the printer receives a status request and returns a response regarding the status is different from the communication port to receive print data (print job), the occupied state for returning a status response is differentiated from the earlier-described occupied state. For example, an occupancy request from PC1 in Step S501 in Fig. 5 and an occupancy request from PC2 in Step S602 correspond to requests from client computers, to which a decision of YES is made in step S404.

Now, a process will be described from when a printer occupancy request is received from a client computer, and YES is given as a decision as to whether to permit occupancy in Step S602 and a process will be described down to Step S422.

### (1) [When decision is YES in Step S404]

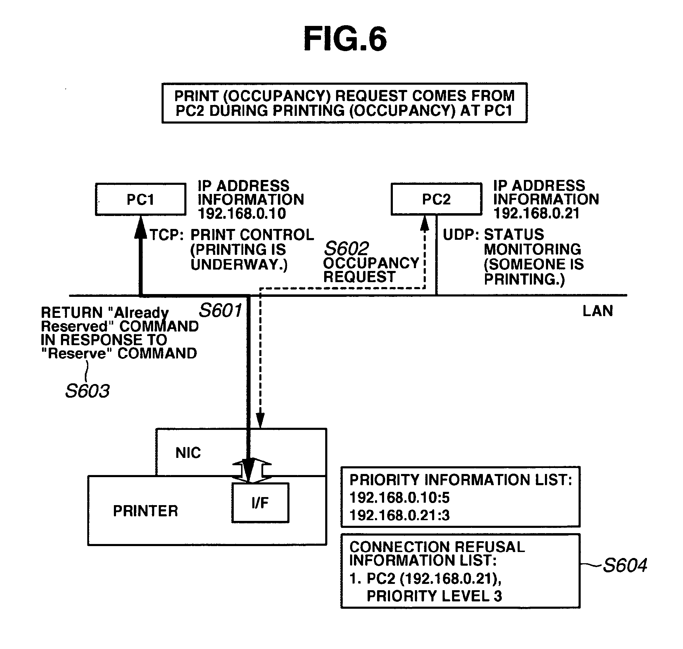

When the decision in Step S404 is YES, in Step S415, a decision is made whether the network interface 21 (or the printer 7) is in the occupied state. For example, as shown in Step S601 in Fig. 6, if print data (job) is being transmitted from PC1, a decision of YES is given in Step S415.

If the decision in Step S415 is NO, the process advances to Step S416, and if the decision in Step S415 is YES, the process goes to Step S423. A case where a process advances to Step S416 will be described as follows.

In Step S416, a decision is made whether the identifier of a client which tried to submit an occupancy request is registered in the connection refusal information list 202 in the network interface 21.

If the decision in Step S416 is NO, the process advances to Step S419. On the other hand, if the decision is YES, the process goes to Step S417, where the level of priority is compared between a single or a plurality of client identifiers registered in the connection refusal information list 202 and the client identifier of the source of occupancy request. The level of priority has been described when reference was made to Fig. 2B.

As a result of comparison in Step S417, if the priority level of the client identifier of the occupancy request source is higher than the client identifier in the connection refusal information list 202, the process moves to Step S419 to let the client computer of the request source occupy the printer.

As a result of comparison in Step S417, if the priority level of the client identifier of the occupancy request source is lower than or equal to the client identifier in the connection refusal information list 202, the process goes to Step S418. In Step S418, a decision is made if the client identifier of the occupancy request source agrees with the client identifier with highest connection priority (corresponding to one registered earliest in chronological order) in the connection refusal information list 202.

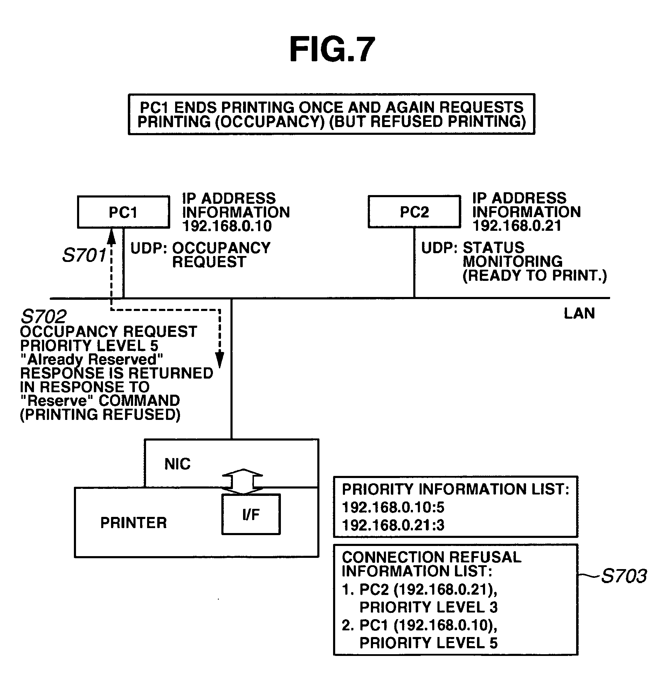

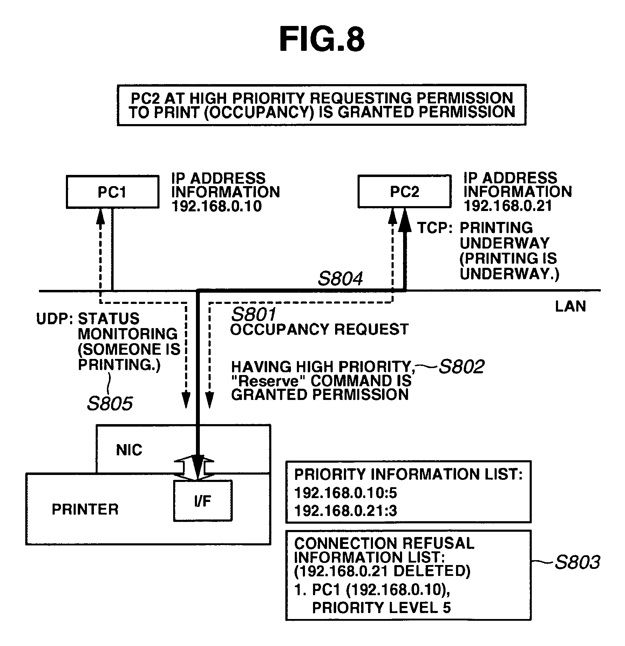

In Step S418, if a decision YES is given, the process goes to Step S419 to let the source of the request occupy the printer. If a decision NO is given, the process advances to Step S423. For example, a decision (Step S702) on the occupancy request in Step S701 in Fig. 7 corresponds to a case when a decision NO is made in Step S418. Further, for example, Step S802 in Fig. 8 corresponds to a case when a decision YES is made in Step S418.

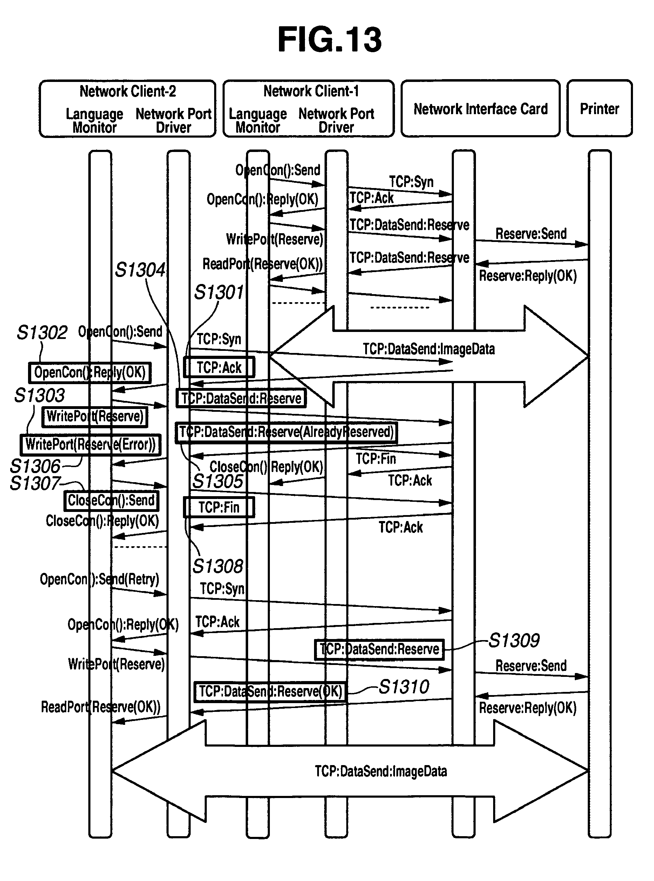

In Step S419, the communication port for print data (or print job) is secured (written in Fig. 4 as NIC's occupancy process) . Then, in Step S420, an occupancy request is notified to the printer controller 26, and in Step S421, a response to the notification in Step S420 is received from the printer controller 26. Then, a value to be returned to the corresponding client computer is set (for example, OK in Fig. 13 which will be described later).

In Step S422, in this case, a response based on the value set in Step S421 is sent to the client computer i.e., the source of the occupancy request. At this time, in response to the occupancy request (connect request) in Step S404, a connection (communication) is established in parallel with the preoccupied connection (communication), so that two sessions are established temporarily. Fig. 4 shows that, after Step S422, the process returns to Step S401. However, it is not necessary to perform the session process in Step S401 or the operation in Step S402 under the condition that once connections have been established. When the process returns through Step S409 to Step S401, the sequences in Step S401 and Step S402 are omitted, and the process advances to Step S403.

On the other hand, when a decision YES is made in Step S415, the process advances to Step S423 to reserve a connection. In Step S423, by analyzing the list, a decision is made whether the identifier of the client computer requesting occupancy of the printer has already been registered in the connection refusal information list 202.

When a decision YES is made in Step S423, the timer value for the corresponding identifier is reset, and the process advances to Step S427. When a decision NO is made in Step S423, the process moves on to Step S424.

In Step S424, the client computer identifier of the source of occupancy request is newly registered in the connection refusal information list 202. By registering the identifiers for identifying the sources of occupancy requests in Step S424, hereafter, whenever the occupancy of the print control unit is released, a decision can be made to permit occupancy to an occupancy request accompanied by a registered identifier and a decision is made to deny occupancy to an occupancy request without a registered identifier. Thus, the rightfulness of the order of prints in the queue can be ensured.

Furthermore, by referring to client information at this time, client identifiers are registered paired with levels of priority. The process of Step S424 includes, for example, addition of identifiers to the connection refusal information list shown in Step S604 in Fig. 6, and addition of identifiers in the connection refusal information list shown in Step S703 in Fig. 7.

The priority of client identifiers of the sources of occupancy requests is set through GUI in Fig. 9, which will be described later. For the clients not registered in the priority list (IP addresses are specified as parameter), their priority is registered as the lowest level (which means priority 10 in this embodiment).

In Step S425, the counting for deciding timeout for newly registered identifiers is started. The process for monitoring this counting will be described in detail later with reference to Fig. 4B.

In Step S427, a connection is established to the client computer of the request source to occupy the printer, in parallel with the connection currently occupied. Though occupancy of the printer is not permitted, a command (Already Reserved command), which shows that a reservation of occupancy has been made, is set as a command for returning a response. When an Already Reserved response is returned, sessions can be limited to two simultaneous sessions on a temporary basis, so that the resources of the network interface 21 (printer side) can be reduced.

In Step S422, the command set in Step S427 is returned from the printer to the client computer which is the source of the occupancy request. The transmission of the Already Reserved command takes place in a communication layer above the transport layer. As will be described in Fig. 13, in the client computer which receives the returned Already Received command, the TCP protocol connection is cut off. It is only necessary to temporarily set up a connection (communication) in parallel with the currently occupied connection (communication) so that the load on the printer and the client computer can be reduced.

After a decision NO is made in Step S404, the sequences in Steps S405 through S414, and in Steps S421 and S422 will be described.

### (2) [When a decision NO is made in Step S404]

When the decision made in Step S404 is NO, in Step S405, a decision is made whether the received command is a data clear command. If the decision is YES, a data clear process in the network interface 21 is executed in Step S408 and Step S409, and the command is also sent to the printer to have its data buffer cleared. When the result of data buffer clear process is returned from the printer in Step S421, the command is sent back to the client computer based on the above reply in Step S422. After the operation of Step S422, the process is supposed to return to Step S401. However, under the condition that once a connection has been set up, it is not necessary to again execute the session process in Step S401 and the operation in Step S402. When the process returns through Step S421 to Step S401, Steps S401 and S402 are omitted, and the process moves on to Step S403.

Meanwhile, when a decision NO is made in Step S405, a decision is made whether a printer control command has been received in Step S406.

In Step S406, a decision is made whether a printer control command has been received. If the decision is YES, the received printer control command is notified from the network interface 21 to the printer to make the printer perform process in compliance with the printer control command. If the decision in S406 is NO, the process goes to Step S407.

In Step S407, a decision is made whether a status request command has been received. If the decision is YES, in Step 409, the command is transferred to the printer side to obtain a required status from the printer. A status obtained as a response is set as a status for response use (Step S421). In Step S422, the status set in Step S421 is returned to the client computer. If the decision in Step 407 is NO, the process moves on to Step S410.

In Step S410, a decision is made whether print data has been received. If the decision is YES, a print data command is transferred to the printer side to store a record of the print engine based on print data received in Step 412. (Bitmap image data is available even in a page description language.) On the other hand, if the decision in Step S410 is NO, the process goes to Step S411.

In Step S411, a decision is made whether a NIC-side processing requests command, such as settings in the NIC itself, is received at a closed NIC. If the decision is YES in Step S411, after the process is executed within the NIC, the result of this process is set as data for response use (Step S421), and data set in Step S421 is sent as a reply to the client computer in Step S422.

Next, the flow in Fig. 4B will be described. Fig. 4B shows a process for deleting an identifier, when an occupancy request corresponding to the identifier registered in the connection refusal information list 202 is not submitted for a predetermined length of time. By this arrangement, the memory capacity required for the connection refusal information list 202 can be held down.

In Step S441, a decision is made whether there is a client identifier (connection refusal information) in the connection refusal information list 2902.

If the decision is YES in Step S441, the first client identifier is picked out in Step S422, and a decision is made whether a timeout has occurred in Step 443. In the flowchart in Fig. 4B, a decision is supposed to be made whether a timeout has occurred. However, the condition is not limited to this event. A clock count may be adopted, or a condition that a predetermined number of occupancy requests have been submitted by other client computers may be adopted, for example.

If the decision is YES in Step S443, the client identifiers that have been picked out are deleted from the connection refusal information list.

Subsequently, a decision is made if there is a next client identifier (connection refusal information) in Step S435, and if there is, similarly, a decision is made whether a timeout has occurred, and the sequences from Step S444 are repeated.

When the connection refusal information is deleted according to the flowchart in Fig. 4B, in Step S416 described above, a decision is made that there is no connection refusal information.

According to the flowcharts in Figs. 4A and 4B, the following advantages can be obtained.

According to this printing system, it is possible to reduce process load on the printer side and the client side when a print job (print data) is output from the client computer to the printer side. It is also possible to firmly guarantee the rightfulness of the order of prints by a much simpler technique than before.

Further, an arrangement like LPR (Line Printer Daemon Protocol) is possible where a plurality of sessions are held, and client computers are caused to submit printer occupancy requests in the holding order of the sessions. In this arrangement, it is necessary to secure, for each session, at least information for management and control of protocol sockets such as IP addresses, port numbers, MAC addresses corresponding to information processing apparatus maintaining sessions, sequence numbers, timer information, window sizes, number of bytes transmitted, for which purpose large amounts of resources are required. Consequently, a large memory area is required on the printer side, so that the printer cost is increased unnecessarily.

On the other hand, in the present printing system, by managing two sessions, it is possible to guarantee the order of occupancy for a plurality of information processing apparatus, and it is also possible to reduce resources on the printer side, decrease use of the memory area, eventually cut down the printer cost without degrading the function.

Furthermore, in the present printing system, two sessions are managed temporarily in a time series fashion, and therefore it is possible to save resources, memory, and cost more than in a mode of having two sessions being set up constantly.

Next, each step of the flowcharts in Figs. 4A and 4B will be described in relation to the block diagrams in Figs. 5 to 8.

Fig. 5 shows a case where a connection refusal information list 202 is not registered on the printer side (network interface 21). In this case, when a request for occupancy of the printer 7 is received, a decision of NO is made in Step S404 and a decision of NO is made both in Steps S415 and S416 in Fig. 4, and either of PC1 (client computer) and PC11 (client computer) can occupy the printer and cause it to output prints.

Fig. 6 shows that, while PC1 is occupying the printer 7 and transmitting data through the communication port for print data (print job)(Step S601), PC2 submits an occupancy request to the printer(Step S602).

In Step S603, in response to a request in Step S602, a signal of connection refusal is issued and, an Already Reserved command is returned from the printer 7 to PC2.

Fig. 7 shows that after print data (a print job) is transmitted from PC1, a printed paper is output based on the data. After the occupancy is released as shown in Fig. 6, PC1 issues an occupancy request again (Step S701).

However, there is a print reservation in the connection refusal information list 202 in Fig. 7, in which PC2 with priority 3 can be recognized. Accordingly, the printer 7 returns to PC1 an Already Reserved command to refuse connection (Step S702) . In Step S703, the identifier of PC1 corresponding to an occupancy request in Step S701 is registered together with priority information (priority 5 in Fig. 7) in the connection refusal information list.

PC1 that received the Already Reserved command, once cuts off the connection though transmission of print job has not yet been completed. Then, PC1 sets up a connection again, and the same occupancy process as in Step S701 is performed.

Fig. 8 shows that permission is preferentially granted to an occupancy request by PC2 based on the identifier of PC2 registered in the connection refusal information list 202 in Fig. 7.

In Step S801, an occupancy request is submitted from PC2, and on the basis of the identifier registered in the connection refusal information list 202 in Fig. 7, a response telling that the printer is occupied by PC2 is returned from the printer 7 to PC2.

In Step S803, the identifier of PC2 is deleted from the connection refusal information list. It may be arranged that the deletion of PC2 from the connection refusal information list should be carried out after the end of print output (ejection of the final page) by the printer 7 based on print data (print job) sent from PC2 to the printer 7.

Fig. 9 shows a GUI for setting priority for each client in the network interface in the present invention. An application software corresponding to the GUI may be a utility registered previously in the client computer or displayed on the Web browser based on HTML information obtained from the Web server for the printer.

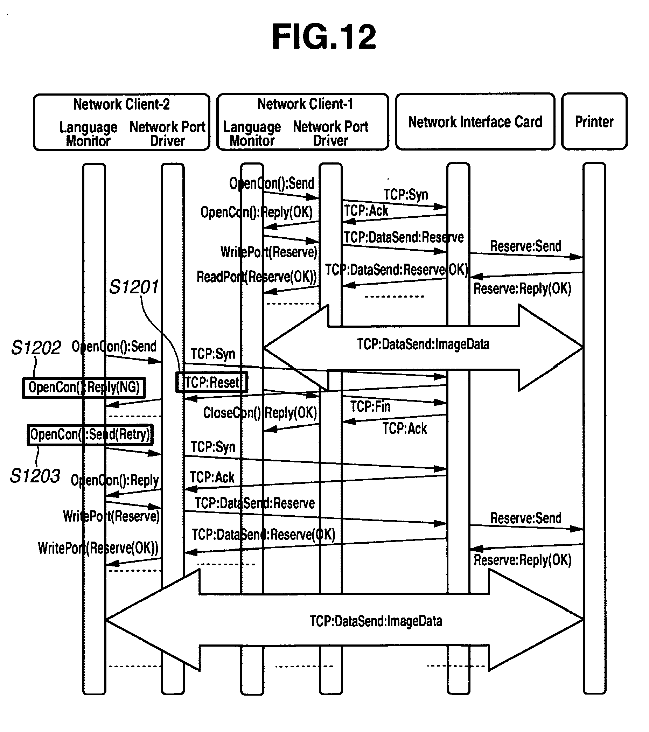

Item 901 is for setting whether to perform occupancy print in the order of prints in queue. Turning ON the item 901 corresponds to executing the flowchart in Fig. 4 as described earlier. Conversely, turning the item 901 OFF means to cause the printer to perform a printer occupancy process in Fig. 12 without executing the flowchart of Fig. 4.

The Item 902 is for setting whether to treat clients in the order of priority. By turning this item ON, it is possible to set whether to execute a decision process in Step S417 in the flowchart of Fig. 4. If the item 902 is turned OFF, the result of a decision in Step S417 in Fig. 4 is always "lower than or equal to" the client identifier in the connection refusal list, and in Step S424, a registration process is executed without assigning a priority level to the client identifier.

Item 903 shows client identifiers which were set, and item 904 shows priority levels that were registered to the identifiers. Note that priority is higher for a smaller number. As an alternative it is possible to set priority in such a way that a larger number has higher priority.

Item 905 is an entry field for newly registering a client identifier in the priority list, and item 906 is an entry field for setting priority corresponding to the client.

Settings input through GUI in Fig. 9 are notified from the client computer to the printer side and stored. As for the storage location, the setting data may be stored in a specified storage unit in the network interface 21, or on the printer side.

By creating the GUI shown in Fig. 9, it becomes possible to build a printing system flexible to suit the working environment of the user's printer.

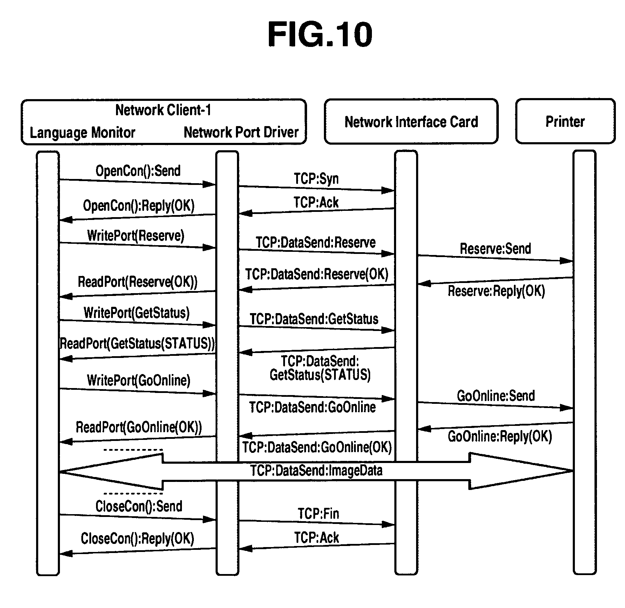

Next, by referring to Figs. 10 to 13, detailed exchange of information between the client computer, the network interface 21, and the printer will be described.

Fig. 10 shows the flow of various items of information when a print request is issued by a client computer in the present printing system.

In Fig. 10, a Network Client-1 corresponds to the client computer, a Language Monitor corresponds to the language monitor, and a Network Port Driver corresponds to the network port driver 16 in Fig. 1. A Network Interface Card corresponds to the network interface 21 in Fig. 2A and a Printer corresponds to the printer 7 in Fig. 2A (except for the network interface 21).

When the Language Monitor (hereafter referred to as LM) is going to transmit print data, the Language Monitor starts with opening the port by OpenCon() function. When this is received by the port monitor (Network Port Driver), a Syn signal is transmitted to the Network Interface by TCP protocol. When an Ack signal is returned by the Network Interface, it becomes possible to communicate with the Network Interface (which corresponds to Step S404 in Fig. 4A). If a Reset signal is returned instead of Ack (which corresponds to Step S428 in Fig. 4A), this means an error, and subsequently the LM performs retry. The OpenCon() function establishes a connection by transmission of Syn, and when a connection has been established, a Reply (OK) is returned to the LM.

When an Ack signal is returned, the LM sends WritePort (Reserve) function to transmit "Reserve command" in order to occupy the printer. Since the Write Port function has a command stored in data which is handed over to the function, the command is described as WritePort (Reserve). This command is a printer control command, which is formed above the application layer (Refer to Fig. 3). For the Reserve command, it is necessary to perform an occupancy process of the network interface itself in parallel with occupancy of the printer. Upon receiving a response to the Reserve command from the printer, the occupancy process in the network interface is executed, and a result of the process is retuned to the client computer side. If the printer is making prints not at the request of the network client but from a client such as a UBS, an Already Reserved response is sent back from the printer, and the network interface does not occupy the printer but returns an error code to the client computer side.

When the client succeeds in occupying the printer, the client computer obtains a printer status by a Write Port (GetStatus)function. The printer status, if it is cached by the network interface itself, is processed only by the network interface and sent back to the client computer. Subsequently, the client computer makes a decision on the status of the printer, and if it is possible to start printing, transmits a GoOnline command to enter online mode. After this, while the status is being checked, print data is transmitted. Finally, the termination process is performed.

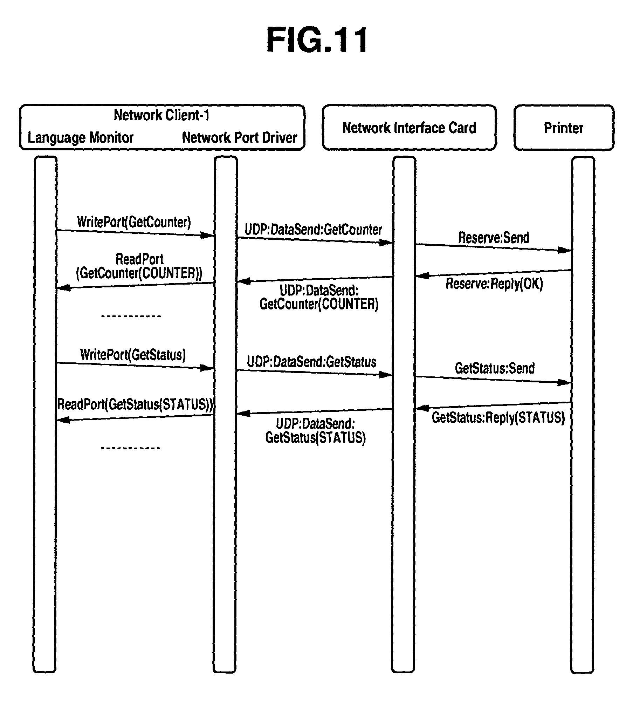

Fig. 11 shows the flow of various items of information when the network interface in the present printing system receives from a client computer a request to obtain counter information of the printer or a request to obtain printer status information.

Unlike the printing in Fig. 10, a TCP connection is not required, and the printer driver requests the port of the network to send a GetCounter command by a WritePort (GetCounter) function. The network port monitor transmits a GetCounter command by UDP to the network interface. To obtain Counter information, it is necessary to make inquiries to the printer and a Getcounter command is transferred to the printer. When a reply is received, the reply is transmitted by UDP to the client computer side. The printer driver reads the value sent back by a ReadPort () function, and a result of the GetCounter command.

Even when a GetStatus command is transmitted, by using the same method, the client computer receives status information. However, as status information, cached information of the network interface is returned. The reason for performing this process is that the network interfaces asynchronously obtains status information about the printer. This "asynchronous" status transmission means to acquire status information by polling from the network interface 21 or by notification of status update information from the printer.

By acquiring information as described, the client computers obtain and display information such as the status of the printer.

Fig. 12 illustrates the flow when occupancy requests are received from a plurality of network clients in the present printing system, and more specifically shows the flow of information when the item of "Perform preferential occupancy print in the order of prints" is set to OFF through the item 901 in Fig. 9 as described above and this setting is reflected in the printer side. A characteristic portion is extracted and described in the following.

In Step S1201, under the condition that printing is in progress in Network Client-1, when Network Client-2 performs printing (OpenCon() function), in response to a connection request from Client-2 on TCP, the network interface returns a Reset signal (which corresponds to Step S428 in Fig. 4A).

In Step S1203, in response to an event that a connection fails to be established (error message), the Language Monitor of Client-2 (Step S1202) cuts off the connection once, and several seconds later, again transmits an OpenCon () function to attempt to re-establish a connection. Because the connection is cut off once as described, it is possible to decrease a connection process load (simultaneous session setup load) on the printer side.

While Client-2 is performing retry, if some client gets a connection established and starts printing when Client-2 issues a connection request again, an error message is sent to Client-2, so that Client-2 has to retry for the third time.

In some instances, retry is repeated, and one's turn is significantly delayed in the order of prints.

Fig. 13 graphically shows the flow of operation when a plurality of network clients issue occupancy requests, and presents the flow of various items of information when the item of "Perform preferential occupancy print in order of prints" is set to ON through 901 in Fig. 9. This setting is reflected in the printer side. A characteristic portion is extracted and described in the following.

In Step S1301, printing is underway in Client-1. When Client-2 performs printing (OpenCon () function), in response to a connection request of Client 2 on TCP, the network interface returns an Ack signal. Upon receiving the Ack signal, the client computer can issue an occupancy request to the printer to make a decision in Step S423. In this respect, Fig. 13 differs from Fig. 12.

After this, since a TCP connection has been established, in Step S1304, Client-2 transmits a Reserve command (which corresponds to a command received by the printer in Step S403 in Fig. 4A). In this case, to this command, the network interface returns an Already Reserved signal in Step S1305 (which corresponds to Step S427 and Step S422 in Fig. 4A). The network interface holds, in the list, client information (client computer identifier) for the client which submitted the occupancy request (which corresponds to Step S424 in Fig. 4A).

When an error message in response to the Reserve command is received, the client computer side executes a CloseCon () function in Step S1307. Though transmission of print data (print job) has not been completed, the client computer closes the TCP connection established in Step S1308. After this, the client computer side performs retry. Because the connection is released once as described, the connection process load (simultaneous session setup load) on the printer side can be reduced.

In Step S1309, in the process of the network interface in response to the Reserve command following the retry, client information is compared this time with the client information stored in the network interface (which corresponds to Steps S417 and S418).

If the occupancy request is from the same client information (which corresponds to a decision of YES in Step S418), occupancy is permitted in Step S1310 (which corresponds to Steps S419, S420 and S421 in Fig. 4A), and the client information held in the network interface is deleted (which corresponds to Step S803 in Fig. 5). If the occupancy request does not come from the same client information, an Already Reserved signal is returned. By so doing, occupancy can be granted to the clients that were once refused occupancy, and occupancy of the printer following print job transmission can be granted in the order of issued jobs.

Items of client information which are being held can be put in a waiting queue. Thus, it becomes possible to correct the order of prints as many times as the number in the waiting queue. However, the waiting queue is supposed to be used without fail in the embodiment described above. Therefore, if some client stops re-sending a job, the processes from other clients cannot be continued any longer. For this reason, the time when the clients join the queue is managed, and if some client does not re-send a job within a certain retry interval, the client is deleted from the queue (which corresponds to Step S444 in Fig. 4B).

In this embodiment, the issuance and release of a connection when making prints are carried out entirely at the initiative of the printer module of a client computer. There is a control method in which, when the network interface recognizes the completion of printing, the network interface requests the network port monitor to issue a TCP connection, in response to which the client computer starts printing. In such a method, it is necessary for the network port monitor to poll the TCP ports to monitor connection requests. In contrast, the present printing system does not require this kind of monitoring.

According to the above-described embodiment, it is possible to reduce a process load when a print job (print data) is output from the client computer to the printer side and securely guarantee the order of prints to be carried out.

### (Second Embodiment)

In the first embodiment, if the printer side receives a connection request from a client computer in a transmission layer lower than or equal to the transport layer (TCP layer for example), the printer side returns a reply showing whether to permit a connection (an Ack signal is given when a rely is OK) and a connection is established. Then, the client computer issues an occupancy request and the printer side decides whether to accept the occupancy request and returns a response of YES/NO to the occupancy request in the communication layer above the transport layer. However, the present invention is not limited to this first embodiment.

In Step S404, it is not necessary to decide whether an occupancy request command has been received in a layer higher than the transport layer. It is possible to make a decision that an occupancy request has been received by accessing the transport layer or a lower layer, and have sequences executed in steps from S415 on. In particular, in a system in which none other than one connection at a time is permitted for communication, it is possible to make an arrangement to transmit an Ack signal as YES or a Reset signal as NO in response to a Syn signal. In this arrangement, there is an advantage of making the printing system simpler.

More specifically, a possible arrangement is that, by putting Steps S401 to S404 in Fig. 4A together, if a Syn signal from a client computer is detected, this is construed as an occupancy request (YES in Step S404) and directly sequences from Step S415 on are executed.

In this case, data to be returned from the printer side to the client computer side in Steps S419 to S422 is Ack and data to be returned from S427 to S422 is Reset. After a connection is established, the sequences from Step S405 on may be executed.

By information exchange in the communication in the transport layer or lower layers, the same effects can be obtained.

### (Third Embodiment)

A modification will be described regarding the technique to guarantee the rightfulness of the order of prints in the printer in each embodiment described above. This embodiment is the same as the above-described embodiments in that, when a request to occupy the printer is received and a decision is made not to permit occupancy, the identifier to identify the source of occupancy request, to which a connection should be established in preference, is held in the printer controller.

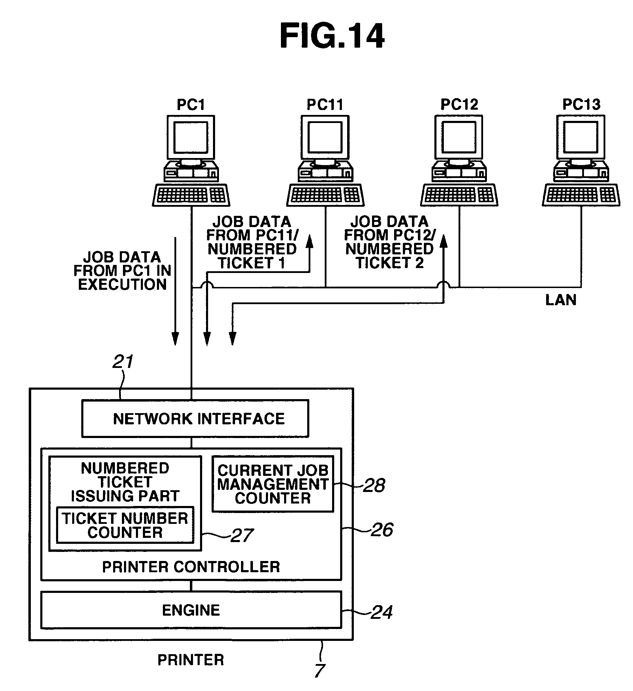

Fig. 14 shows the outline of the printing system according this third embodiment. The parts assigned the same numbers as in Fig. 2A are regarded as having the same functions and will not be described in detail.

A numbered ticket issuing part 27 has a function to issue job numbered tickets when the printer receives an occupancy request while a print job is in execution or the numbered ticket management mode is enabled.

Upon receiving an occupancy request, the numbered ticket serial-number counter included in the numbered ticket issuing part 27 counts up the count value by one. The ticket issuing part issues a job numbered ticket in accordance with the count value and sends a response to the client computer which is the source of occupancy request. The serial-number counter is enabled when a print job received by the printer, is in process or when the numbered ticket management mode is operational, and counts up one each time an occupancy request not accompanied by a numbered ticket is received.

A current job management counter 28, which has its initial value matched to the value on the serial number counter, is enabled when the printer is in the numbered ticket management mode, and counts up one each time a job is completed. The numbered ticket management mode is disabled when the serial-number counter has the same number as the current job management counter.

When a numbered ticket is received from the printer, the client computer detects an occupancy request by polling and sends the occupancy request together with the numbered ticket to the printer.

When the printer 7 receives an occupancy request accompanied by a numbered ticket, if the previous job has been completed and the value of the current job management counter coincides with the value of the ticket accompanying the occupancy request, the printer 7 accepts the occupancy of the printer and causes the client computer which is the source of occupancy request to send print data (print job).

The job numbered ticket has the count value of the serial number counter and a unique name peculiar to the printer (IP address, USB ID, MAC address, for example).

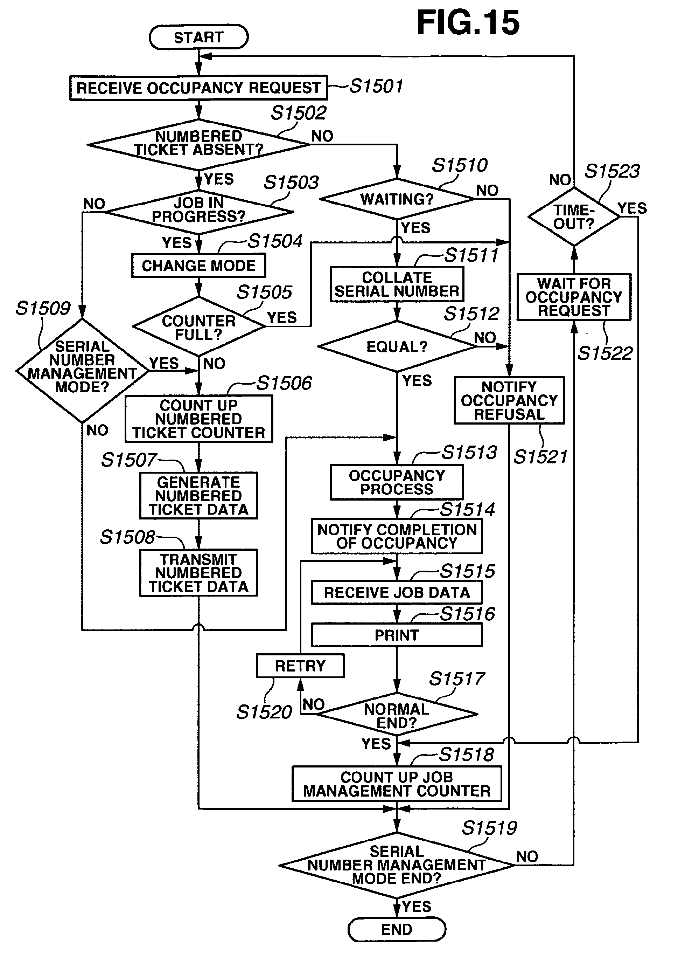

The process in the printer 7 will next be described by using the flowchart in Fig. 15. In Fig. 14, the numbered ticket issuing part 27 and the current job management counter 28 is described as parts of the printer controller. However, they may be provided on the network interface 21 or arranged at one's own discretion.

To begin with, an occupancy request is received in one of PC1, PC11, PC12 and PC13 in Step S1501. With respect to reception of an occupancy request, the same sequences as in Steps S401 to S404 in Fig. 4 are executed. In the flowchart of Fig. 15, however, a decision is made in Step S1502 whether a job numbered ticket is attached to the occupancy request, which is a different point from the operations in Fig. 4. When a decision of YES is made in Step S1502, the process goes to Step S1503. When a decision of NO is made, process moves on to Step S1510.

First, a case is described where a YES decision is made in Step S1502, in other words, when an occupancy request without a numbered ticket is received.

In Step S1503, a decision is made whether a print job is in process.

In Step S1503, if the decision is NO, then in Step S1509, a decision is made whether the numbered ticket management mode is operational. If the decision is YES in S1509, the process advances to Step S1506.

On the other hand, If the decision is YES in Step S1503, the process goes to Step S1504, where the mode is changed. In other words, a flag is raised, and the numbered ticket issuing mode sets in.

In Step S1505, a decision is made whether the FULL flag of the serial number counter is active (which corresponds to a situation in Step S402 in Fig. 4 where the connection refusal information has reached the MAX value). If the decision is "active", the process moves to Step S1521, or if the decision is "inactive", the process goes to Step S1506.

In Step S1506, the serial number counter is counted up one, and in Step S1507 a job numbered ticket is generated by using the counter value counted up in Step S1506 and the unique value of the printer (USB ID or MAC address). In Step S1508, a job numbered ticket that a job numbered ticket generated in Step S1507 is sent back to the client computer.

Next, a case is described where the decision in Step S1502 is NO, that is, when an occupancy request accompanied by a numbered ticket is received.

In Step S1510, a decision is made whether the printer is in the waiting state, and if the decision is YES (waiting), the process goes on to Step S1511. If the decision is NO (not waiting), in other words, when the printer is occupied by a client computer and a print job is in execution, the process advances to Step S1521.

In Step S1511, the value of the serial number counter of job numbered ticket is compared with the value of the current job counter, and in Step S1512, the result of comparison in Step S1511 is checked.

When the value of the serial number counter of job numbered tickets is equal to the value of the current job counter, the process proceeds to Step S1513, and in cases other than this, the process goes to Step S1521.

In Step S1513, occupancy of the printer is granted to a client computer which sent an occupancy request accompanied by a numbered ticket to the printer, and a notification of the completion of occupancy is sent to the client computer to tell that the printer is prepared for new occupancy (corresponding to DataSend Reserve (OK) in Step S1310).

In Step S1515, the printer receives job data (print data) sent from the client computer which is the source of occupancy request. In Step S1516, the printer makes prints from job data received. When it is decided in Step S1517 that the print process has been completed, in Step S1518 its current job management counter is counted up one and in Step S1519 it is decided whether the serial number management mode has ended. More specifically, in the case where the serial number management mode is disabled and the serial number counter value is equal to the current job management counter value, the serial number management mode comes to an end, or in the other cases, the printer moves on to Step S1522.

In Step S1522, the printer waits until it receives an occupancy request from a client computer. In Step S1523, a decision is made whether the timer count value has become higher than or equal to a preset timeout value after the current job management counter was updated. If a decision of YES is made in Step S1523, the process goes to Step S1518. If a decision of NO is made in Step S1523, the process goes back to Step S1501.

In the numbered ticket management mode, if an occupancy request accompanied by a relevant numbered ticket is not received for longer than a fixed length of time since the current job management counter counts up and it becomes possible to accept the next job, timeout occurs. And the current job management counter is caused to count up, and the printer waits for a job with the next serial number. Thus, job-process stagnation due to trouble on the host side can be precluded.

In Step S1521, a refusal of the occupancy request is notified to the client computer. This notification of refusal corresponds to Already Reserved in Steps S427, S422, and S1305 as described in the first embodiment, for example. The client computer, which receives this notification of connection refusal, cuts off the connection of TCP protocol once and retries transmission of an occupancy request in Step S1501 to occupy the printer.

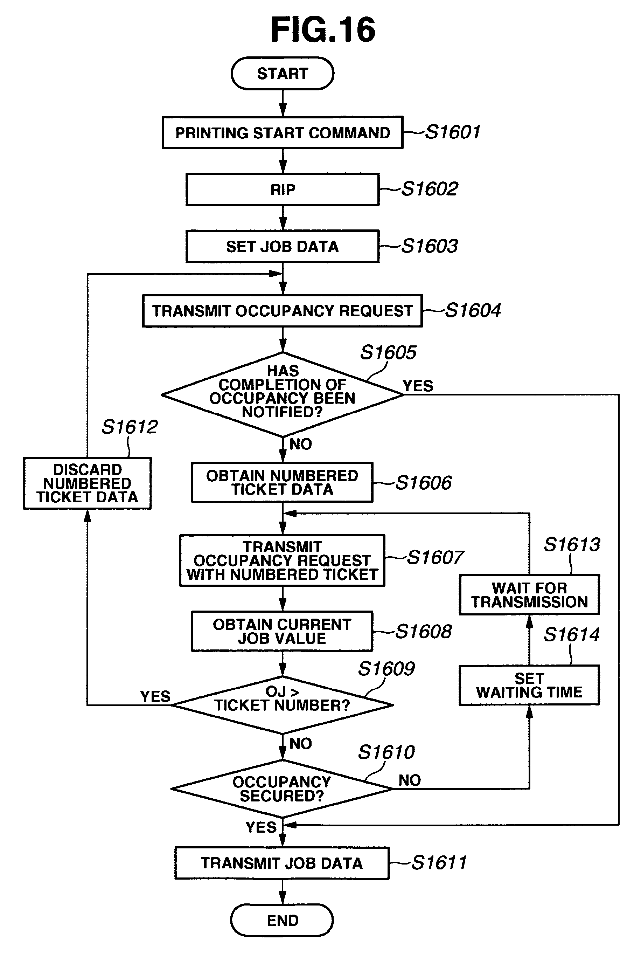

Next, an operation on the client computer side corresponding to the flowchart in Fig. 15 is described by using the flowchart in Fig. 16. In Step S1601, a print start directive is issued. The print start directive is issued by a print instruction from the user, for example, through the user interface of the printer driver.

In Step S1602, a print data generation process based on data which is a print object is executed. In Step S1602, a bitmap image data generation process (hereafter referred to as RIP) is carried out. This embodiment is not limited to bitmap image data as already discussed in the preceding embodiments.

In Step S1603, a print job, including RIP-processed image data, is generated and transferred to the print data transmission module of the client computer.

In Step S1604, an occupancy request is transmitted to the printer before print data is transmitted to the printer. The occupancy request process is just as described in Steps S401 to S403 in Fig. 4A.

In Step S1605, a decision is made whether a notification of occupancy permission from the printer, in other words, a notification of completion of occupancy has been received from the printer side. If the decision is NO, the process goes to Step S1606. If the decision is YES, the process moves on to Step S1611. In Step S1611, a generated print job is transmitted to the network interface 21. On the printer side which has received the print job, the same process described in Step S412 in Fig. 4A is executed.

In Step S1606, a job numbered ticket is received from the printer. This job numbered ticket is just as has been described above.

In Step 1607, an occupancy request including a job numbered ticket obtained from the printer side in Step S1606 is submitted to the printer.

Subsequently, in Step S1608, a current job management counter value is obtained from the current job management counter 28.

In Step S1609, a decision is made whether the current job management counter value is larger than the serial number value held in the printer. If it is decided that the counter value is larger (YES), the process goes to Step S1612. If the decision in Step S1609 is NO, the process goes to Step S1610.

In Step S1610, a decision is made whether occupancy is obtained, if the decision is YES (occupancy obtained), the process moves on to Step S1611. If the decision is NO (occupancy refused), the process moves on to Step S1614.

In Step S1614, a difference is calculated between the current job management counter value obtained in Step S1608 and the number of the job numbered ticket. If the difference is large, the waiting time is increased, and from then on each time the difference decreases, the waiting time is shortened. By this arrangement, the occurrence of wasteful traffic can be further reduced. In this embodiment, the identifiers for identifying the sources of occupancy requests are managed on the printer side indirectly through the use of job numbered tickets, so that it is possible to realize a process for adjusting the waiting time on the client computer side.

The increase or decrease in the above-mentioned difference and the waiting time can be set by the user's actions on the operation panel of the printer main body or remotely from the client computer.

In Step S1613, the standby process is performed according to the waiting time set in Step S1614, and after the standby process is finished, the operations from Step S1607 on are repeated.

Meanwhile, if a decision of YES is made in Step S1609, the job numbered ticket is discarded in Step S1612. This corresponds to the operations that could occur when the number of the job numbered ticket issued in response to an occupancy request by the client computer of its own is disregarded due to a timeout decision process in Step S1523 in Fig. 15, for example, and it becomes necessary to wait on the printer side for a job numbered ticket of the next number. If the job numbered ticket is discarded in Step S1612, the client computer again sends an occupancy request in Step S1604.

### (Fourth Embodiment)

In each of the embodiments described above, the printing system is described in which PC1 or PC11 and the printer 7 are communicably connected. But the present invention is not limited to this configuration, and other forms of configuration are possible.

For example, by using the above-mentioned printer as a virtual print server communicable with a plurality of printers, the above-mentioned sequences and flowcharts can be applied to a printing system. By this arrangement, the load of the print server can be reduced just as in the first embodiment. Thus, a less-expensive print server can be realized, and as the load on the print server is decreased, the print server can perform some other processes.

Besides a printing system to which client computers and a print server are connected, as another example of application, it is possible to build a system in which the client computer in the first embodiment is used as a virtual print server to mediate between a plurality of client computers and a plurality of printers.

Therefore, the process load in the client computer in each of the above-described embodiments could be reduced and the software structure simplified. Therefore, the same advantages can be obtained, such as a reduction in the process load on the print server and a simplification in the software construction in the print server.

### (Fifth Embodiment)

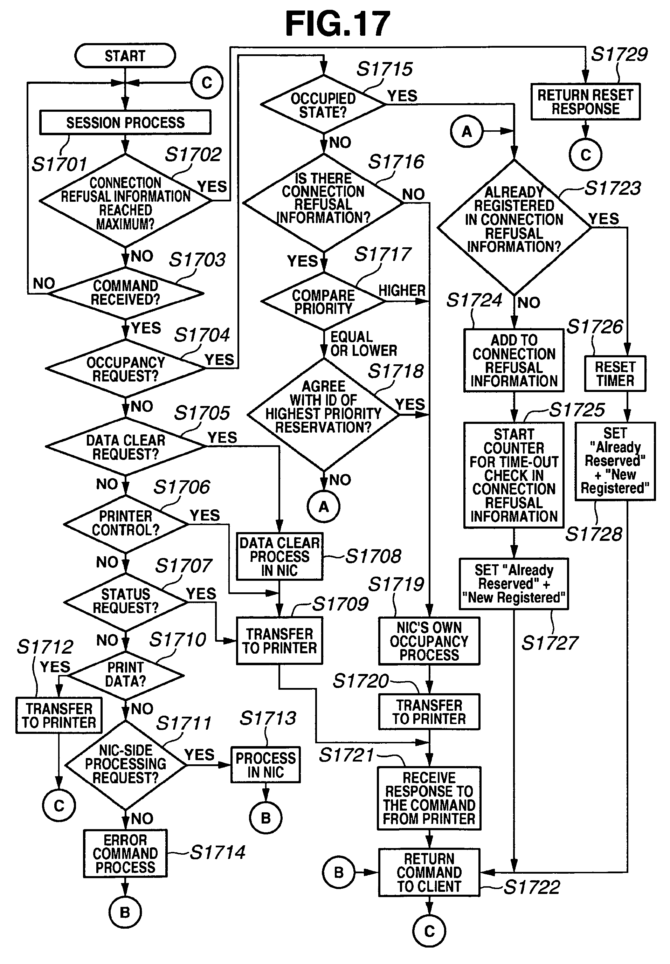

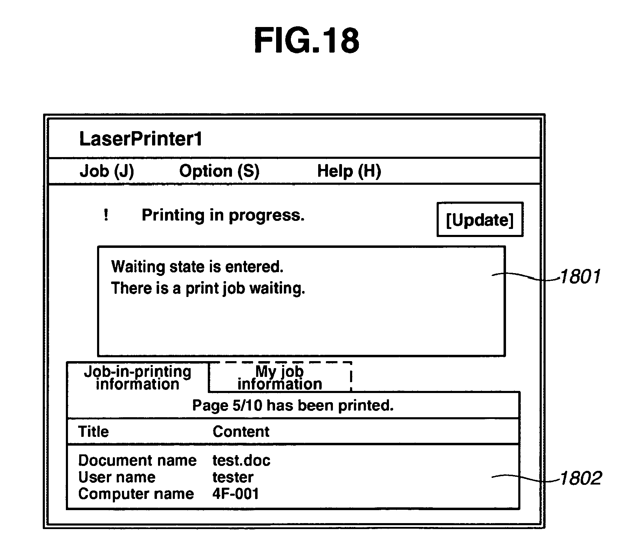

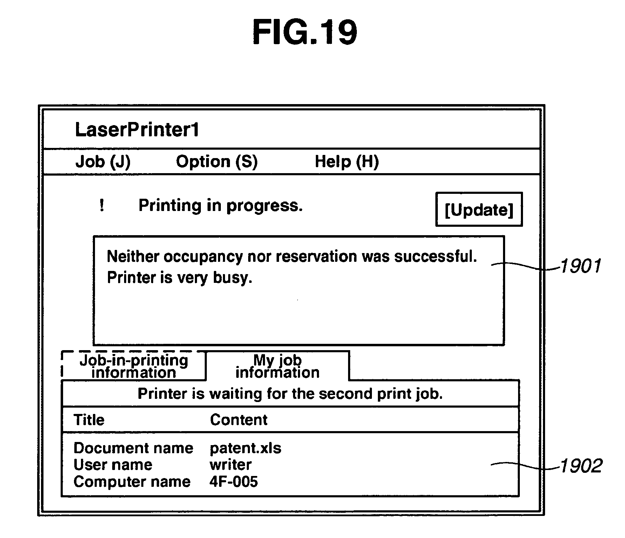

In each of the above-described embodiments, the "Already Reserved" information indicates that the printer is occupied by some client computer or a reservation of occupancy has been registered. To be more specific, description has been made that the printer returns an Already Reserved command as a reply in a case where the printer is unable to permit occupancy to an occupancy request from a client computer (Fig. 4).
In this fifth embodiment, to show a further applied example, description will be made of a case where the printer gives different replies depending on whether or not connection refusal information, including an identifier of another client computer, has been registered. A concrete example will be described in which besides the "Already Reserved" information, a "New Registered" information" or an "Already Registered" information (for example) is returned as a reply. In this embodiment, the client computer, when receiving a response information from the printer side, acquires detailed information, such as who is occupying the printer (making prints), what is the job occupying the printer, and so on. This acquisition of information is performed through a different communication port from the communication port for "Already Reserved" information or the like. In other words, a "job information acquire command", which is decided as a printer control command in S406 or S1706, is issued from the client computer to the printer side through the above-mentioned different port. The NIC that received a "job information acquire command" in S406 or S1706 transfers the received job information control command to the printer, receives a response from the printer, and sends back the received information to the client computer. The information, which is sent back to the client computer, includes the name of the job under printing, the owner name of the job, the name of the client computer that issued the job, for example. Figs. 18 and 19, which are described later, show images displayed based on such information about the job under printing.
Referring to the flowchart in Fig. 17, detailed description will next be made of the process in the network interface 21 (printer 7) in Fig. 2.
The process steps in S1701 to S1721 are basically the same as those described in Fig. 4 and their detailed descriptions are omitted. The following description is made on the assumption that a decision made in S1715 is YES or a decision made in S1718 is NO. After a decision NO is rendered in S1723, the connection refusal information is added with the identifier of the client and registered. In the process going through S1724 and S1725 to S1727, information that there was not a reservation of occupancy by any other client and an occupancy reservation has been made for the sake of the source of occupancy request at the printer main body, is set as a response value to the client computer. In other words, the printer sets "New Registered" to add to "Already Received". Then, the value set in S1727 is sent back to the client computer that is the source of the occupancy request in S1722.
On the other hand, if the decision made in S1723 is YES, some other client has been already registered in the connection refusal information list. In this case, information that an occupancy reservation has been already made by some other client is set as a response value from the printer to the occupancy-requesting client computer. To be more specific, the printer in S1728 sets "Already Registered" to add to the "Already Reserved". The value set in S1728 is sent back in S1722 to the client computer as the source of the occupancy request.
By acquiring the value (information) set in S1727 or S1728, the client computer can easily obtain and display information related to printer occupancy. For example, a configuration may be conceived such that the client computer side obtains detailed information related to printer occupancy using a communication port different from the communication port for occupancy request. However, according to the configuration, without executing such a step, it is possible to know to some extent an occupied state and an occupancy-reserved state.
After the value set in S1727 or S1728 is sent from the printer to the client computer, the client computer outputs a TCP Fin signal to close a TCP connection. The process concerned with the TCP Fin signal has been described in S1308. By the process of closing the TCP connection, a message in a communication layer higher than or equal to the transport layer, such as "Already Reserved" can be supplied to a plurality of clients requesting occupancy. In other words, a finite number of connections may be made available to more than the finite number of clients, and the occupied state or the occupancy-reserved state on the printer side may be easily notified to client computers via the communication port used for occupancy request.
Figs. 18 and 19 are examples of message displayed on a client computer according to a response process in S1722 in Fig. 17 described above. Reference numeral 1801 in Fig. 18 denotes an example of display on a client computer when a value set in S1727 is received from the printer side through the communication port for occupancy request. More specifically, this is an example of message when a client computer receives an "Already Reserved + New Registered" and displays a message related to the received information. In 1801, the printer is already occupied by some other client computer and a reservation of occupancy was successful. As an example of message, the message is not limited to the character string shown in Fig. 18 but may be any other types of character string. Graphical display such as graphic forms or pictures may be used.
Reference numeral 1802 denotes display based on "information about the job under printing" that is obtained by a client computer from the printer side. This "information about the job under printing" is obtained by a client computer through a communication port different from the communication port dedicated to information such as "Already Reserved" as described above. Information about a job under printing is information being currently processed in the printer. Information 1802 includes detailed information about a job, such as the number of pages printed.
Meanwhile, reference numeral 1901 in Fig. 19 shows an example of display on a client computer when a value set in S1728 is received from the printer through the communication port for occupancy request. The client computer receives "Already Reserved + Already Registered" and displays a message related to the received information. The message 1901 indicates that the printer is already occupied by another client computer and a reservation of occupation cannot be made. Note that as an example of message, a displayed message is not limited to the character string shown in Fig. 19 but may be any other kind of character string, or may be graphical representation, such as graphics and pictures.
Reference numeral 1902 denotes an example of display of "my job information", and more specifically shows a wait state (second wait state). This "my job information" need not be obtained from the printer side since job information is stored in memory, which the client computer already transmitted or is going to transmit.
As described above, from the processing shown in the flowchart in Fig. 17, the client computer can easily obtain, being interlocked with the occupancy request process, the occupied state or the occupancy-reserved state on the printer side, without especially obtaining information about a job under printing via a predetermined port. The client computer can let the users know the obtained result. Additionally, also from the flowchart in Fig. 4, the same effects can be obtained.
Furthermore, the client computer, by obtaining information about a job under printing, can obtain detailed job information and let it known to the users if necessary.
Meanwhile, in each of the above-described embodiments, as shown in S1308 in Fig. 13, it has been arranged that a communication session is cut off on the client computer side, but it is also possible that a communication session is cut off on the printer side.

### (Other Embodiments)

Supplying program code of software, which realizes the function of the above-described embodiments, to the computers in a system or equipment connected with the various devices, and operating the above-mentioned devices by programs stored in the computer (CPU or MPU) of the system or the equipment, are included in the scope of the present invention.

Furthermore, in this case, the program code of the above-mentioned software realizes the function of the above-mentioned embodiment. The program code itself, and units to supply the program code to the computer, such as recording media storing the program code may constitute the present invention. As recording media for recording the program code, for example, flexible disks, hard disks, optical disks, magneto optical disks, CD-ROM, magnetic tape, nonvolatile memory cards, and ROM may be used.

Furthermore, the function of the above-mentioned embodiment is realized by executing the program code supplied by a computer, and also the function of an embodiment is realized by the program code in collaboration with an OS (operating system) that runs on the computer or some other application software, for example. In the cases, the program code is included in an embodiment of the present invention.

Furthermore, a case is also included in the present invention where, after supplied program code is stored in memory that resides on a function expansion board of a computer or on a function expansion board connected to a computer, for example, the CPU, provided on the function expansion board or on the function expansion unit, executes part or all of the actual process, by which the function of the above-mentioned embodiment is realized.

## Claims

1. A printer controller (21) communicable with a plurality of information processing apparatuses (1, 11), comprising:
a decision unit for receiving an occupancy request to occupy said printer controller from an information processing apparatus and deciding whether to permit or refuse said occupancy;
a first response unit for returning a response indicating permission or refusal of said occupancy based on a decision by said decision unit, and
a registration unit for registering an identifier to identify the source of said occupancy request when said decision unit decides to refuse occupancy,
wherein said decision unit, having decided to refuse occupancy, decides to permit occupancy to said occupancy request when said occupancy request accompanied by said identifier is received, and decides to refuse occupancy to an occupancy request when received without an identifier.

2. The printer controller according to Claim 1, further comprising a second response unit for returning a response to show whether to permit a connection to be established to an information processing apparatus when a connection request is received, wherein said information processing apparatus issues an occupancy request based on a response from said second response unit.

3. The printer controller according to Claim 2, wherein a response by said second response unit is transmitted in a communication layer of a network interface (21), said communication layer being lower than or equal to the transport layer, and a response from said first response unit is transmitted in a communication layer higher than the transport layer.

4. The printer controller according to any preceding claim, wherein a response by said first response unit is a command in a communication layer of a network interface (21) lower than or equal to the transport layer.

5. The printer controller according to any preceding claim, wherein in reply to a response by said first response unit, said information processing apparatus cuts off the connection even if transmission of a print job is not yet completed, and establishes a connection again.

6. The printer controller according to any preceding claim, further comprising a deletion unit for deleting an identifier when there is no received occupancy request corresponding to said identifier registered by said registration unit under a predetermined condition.

7. The printer controller according to any preceding claim, wherein, under a condition that said occupancy has been released and an identifier has been registered in said registration unit, when an occupancy request is received, said decision unit compares the priority of an identifier corresponding to said occupancy request and the priority of said registered identifier, and a decision is made based on a result of said comparison.

8. The printer controller according to any preceding claim, wherein the priority corresponding to said identifier is set by a setting instruction from said information processing apparatus.

9. The printer controller according to Claim 1, wherein an information processing apparatus displays a message according to the response by said first response unit.

10. A method of controlling the order of occupancy of a printer, comprising:
receiving an occupancy request to occupy a printer controller from an information processing apparatus; a first decision step for deciding whether to permit or refuse occupancy;
a first response step for returning a response showing permission or refusal of said occupancy based on a decision by said first decision step; and
a registration step for registering an identifier to identify a source of said occupancy request when a decision is made to refuse occupancy by said first decision step, and
a second decision step, wherein, after a decision has been made to refuse occupancy in said first decision step, according to release of occupancy, when an occupancy request accompanied by said identifier is received, a decision is made to permit occupancy, and when an occupancy request without said identifier is received, a decision is made to refuse occupancy.

11. The control method according to Claim 10, further comprising a second response step for returning a response to show whether to permit or refuse connection in response to reception of a connection request, wherein said information processing apparatus issues an occupancy request based on a response by said second response step.

12. The control method according to Claim 11, wherein a response from said second response step is transmitted in a layer in a network interface lower than or equal to the transport layer and a response from said first response step is transmitted in a layer higher than or equal to the transport layer.

13. The control method according to Claim 10, wherein a response from said first response step is a command in a communication layer in a network interface lower than or equal to the transport layer.

14. The control method according to Claim 10, wherein said information processing apparatus cuts off the connection in reply to a response from said first response step even if transmission of a print job is not yet completed, and establishes a connection again.

15. The control method according to Claim 10, further comprising a deletion step for deleting a corresponding identifier when there is no received occupancy request corresponding to said identifier registered by said registration step under a predetermined condition.

16. The control method according to Claim 10, wherein, under a condition that said occupancy has been released and an identifier has been registered in said registration step, when an occupancy request is received, said first decision step compares priority of an identifier corresponding to said occupancy request and priority of said registered identifier, and a decision is made based on a result of said comparison.

17. The control method according to Claim 10, wherein priority corresponding to said identifier is set by a setting instruction from said information processing apparatus.

18. The control method according to Claim 10, wherein said information processing apparatus displays a message according to the response by said first response step.

19. A program which, when loaded into a computer and executed, causes said computer to execute a control method as claimed in any one of claims 10 to 18.

20. A computer readable medium storing a program as claimed in claim 19.
